# EUROPEAN PATENT SPECIFICATION

(11) **EP 0 371 765 B1**
(45) Date of publication and mention of the grant of the patent: **22.06.1994**
(21) Application number: 89312364.6
(22) Date of filing: 28.11.1989
(51) Int. Cl.: G03G 15/04, G03B 27/52, H04N 1/10

(54) **Document reproduction machine having book edge copying capability**
Dokumenten-Reproduktionsgerät mit der Fähigkeit, ein Buchmittelteil zu kopieren
Machine de reproduction de documents permettant de copier la partie centrale d'un livre

(30) Priority: 28.11.1988 US 276589
(43) Date of publication of application: 06.06.1990
(73) Proprietor: XEROX CORPORATION, Rochester New York 14644 (US)
(72) Inventor: Rees, James D., Pittsford New York 14534 (US)
(74) Representative: Johnson, Reginald George

(56) References cited:
- DE-A- 3 546 404
- GB-A- 2 158 599
- US-A- 3 832 057
- US-A- 4 158 497
- US-A- 4 386 843
- US-A- 4 711 554
- XEROX DISCLOSURE JOURNAL, vol. 5, no. 5, September/October 1980, pages 547-560, Stamford, US; R.F. ALLIS: "Light guide illuminator"
- XEROX DISCLOSURE JOURNAL, vol. 12, no. 5, September/October 1987, pages 231-232; J. GUENTHER: "Library copier"

## Description

The present invention relates to a document reproduction machine such as a xerographic copier or scanner/printer and, more particularly, to such a machine particularly suited for copying or scanning multi-page originals such as bound books.

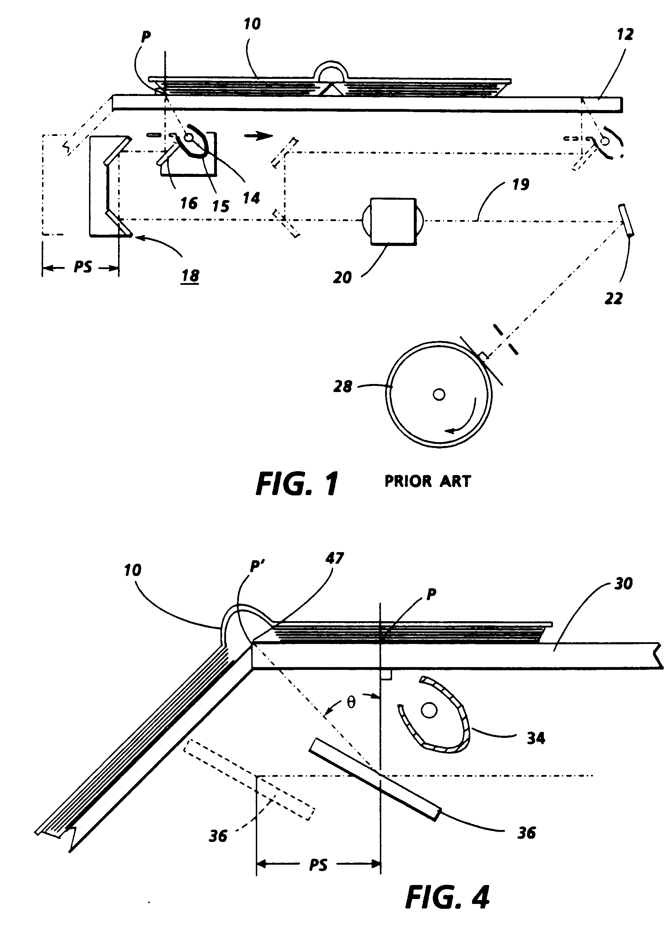

In prior art reproduction machines, the copying of multi-page originals such as bound books presents a problem in that it is difficult to adequately copy the information adjacent the binding area. The operation is typically accomplished by pressing that page or pages to be copied against the surface of a platen. U-S-A-4,659,207; 4,688,930; 4,716,439 and 4,711,554 disclose various scanning arrangements which attempt to scan either one page or the other as the book is pressed against the platen surface. However, as shown, for example, in Figure 1 of the 4,716,839 patent, portions of the pages adjacent the binding area remain a short distance above the platen surface. Consequently, the information contained in these portions is out of focus on the photosensitive recording medium (and hence on the output sheet). Attempts to press the binding area closer to the platen can result in breaking the binding of the book.

One solution known in the art to the above binding edge copying problem is to utilize a platen having an angled edge portion sloping generally downward, whereby the bound part of a book is held to the corner position of the platen so that the entire surface of one page may be placed in intimate contact with the surface of the platen. Examples of such a system are disclosed in U-S-A-3,775,008, 4,068,950 and in the Xerox Corp. 4000 copier. A further book copying system is described in GB-A-2,158,599 in which a book is positioned over the left corner edge of a platen and the half of the book not being copied is allowed to be suspended vertically. An inwardly slanted side wall portion is used instead of a vertical wall to prevent the book from being unstabilised. Prior art copiers utilizing the corner book edge feature have several disadvantages. The magnification range is limited because of space limitations and restrictions on the lens movement; e.g. the 4000 copier uses a moving lens whose movement is restricted. Further, the prior art systems require a pre-scan motion which, heretofore, has inhibited required movement of the scanning mirrors. The problem presented by the pre-scan requirement is best illustrated by reference to Figure 1. Figure 1 shows a prior art, full-rate, half-rate, scanning system which is conventional for most present day commercial copiers. A book 10 open to the 180° position is placed on the surface of platen 12. A scanning system includes an illumination lamp 14 and a full rate scan mirror 16. Lamp 14, associated reflector 15 and mirror 16 are adapted to move, as a unit, from left to right beneath the platen at the full rate (scanning) speed. A corner mirror assembly 18 is adapted to move from left to right at ½ the scanning speed to maintain a constant system conjugate. The image is reflected along optical axis 19, projected through lens 20 and reflected through mirror 22 onto the surface of a photoreceptor drum 28.

The lens optical axis 19 intercepts the object plane (platen 12) perpendicularly and intercepts drum 28 perpendicular to a tangential plane. Optical axis 19, for this case, coincides with the system axis but this is not true for the scanning system of the present invention, as described below. Changes in magnification are accomplished by moving lens 20 towards and away from drum 28 (for reduction or enlargement, respectively) and by repositioning the mirror 18 location to adjust total conjugate appropriately. This type of system requires that the scanning mirror undergo a prescan excursion to the left prior to initiation of the scan exposure cycle, with initial acceleration (and vibration damping) taking place in the prescan zone shown as PS. The start-of-scan position is identified as point P. If an attempt is made to modify this prior art system by adding a book edge (shown dotted), a new start-of-scan position P' would be required. As is evident the pre-scan motion of assembly 18 would be constrained because the assembly would run into the book edge before the pre-scan motion is complete.

The present invention is intended to overcome these problems associated with prior art book edge copiers. Accordingly, there is provided an electrophotographic reproduction machine incorporating a platen having a downwardly sloping shelf at one end, said platen and shelf adapted to accommodate the binding area of a bound book when said book is placed in a copying position and supported by said platen and shelf, said machine further including an optical scanning and imaging system for scan/illuminating the book and for projecting an image along an optical path onto a photosensitive image medium to form a latent image of the book thereon, said optical scanning system comprising an elongated illumination means adapted to incrementally illuminate said book beginning at a point P' coinciding with said binding area, a full rate scan mirror adapted to be positioned a prescan distance PS from a start of scan position P to undergo a prescan, the mirror, when reaching position P, begins scanning said book at the binding area, the light from the mirror being reflected to a half rate scan mirror, the full rate scan mirror being positioned so that the optical path between the platen and the full rate scan mirror forms a constant angle ϑ with respect to a line perpendicular to the platen, and a projection through lens which receives the light reflected from said half rate scan mirror and projects the light to said image medium, said projection through lens being inclined at said constant angle ϑ with respect to the optical path through said lens.

An electrophotographic reproduction machine in accordance with the invention will now be described, by way of example, with reference to the accompanying drawings, in which:-

Figure 1 illustrates, in side view, a prior art full-rate/half-rate scanning system.

Figure 2 illustrates, in side view, a first aspect of the invention incorporating a reversed relationship between the full rate and half rate scan mirrors.

Figure 3 illustrates, in side view, an embodiment of the present invention showing a modified scan system and a rotated system axis in conjunction with a book edge platen.

Figure 4 shows an enlarged view of the pre-scan area of Figure 2.

Figure 5 illustrates an unfolded, simplified, optical system comparing the optical axis of the Figure 1 system and the system axis of the Figure 2 embodiment.

Figure 6 shows a second embodiment of the present invention incorporating a rotated system axis in combination with a raised platen.

Figure 7 shows the embodiment of Figure 2 wherein the document image is projected onto a photosensor array.

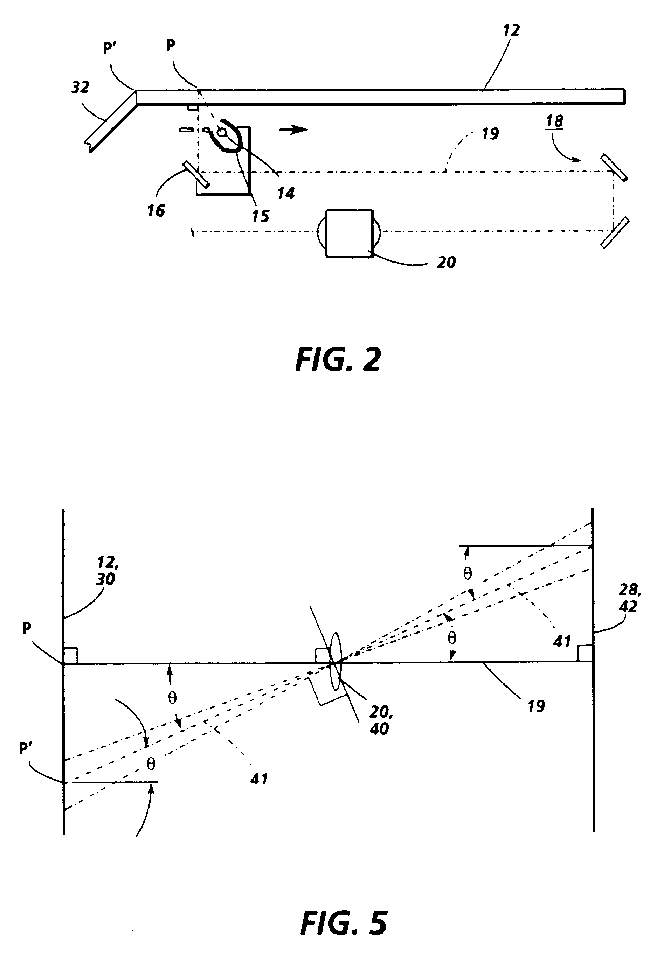

Referring to Figure 2, the prior art arrangement of Figure 1 has been modified by adding a book edge 32 and by moving the half-rate assembly 18 from a position to the left of start-of-scan position P to a position to the right of position P. The inclination of the scan mirror is reversed from the Figure 1 position but the optical axis 19 is still the same as that shown in Figure 1; e.g. perpendicular to the platen. The Figure 2 embodiment provides some additional space for the full rate mirror 16 to move through the pre-scan excursion. However, and according to a second aspect of the invention, the book edge imaging is further enhanced by tilting the system axis is in such a way that the start-of-scan position coincides with point P' of Figure 2, which is also the binding area of the book. This is accomplished by rotating the scan mirror and the through lens in a manner to be described below. While a tilted system is known in the prior art (US-A-3,832,057), that tilted system is used in conjunction with the unique requirements of using a half-lens as the image-projecting device and differs in both function and design from the present invention.

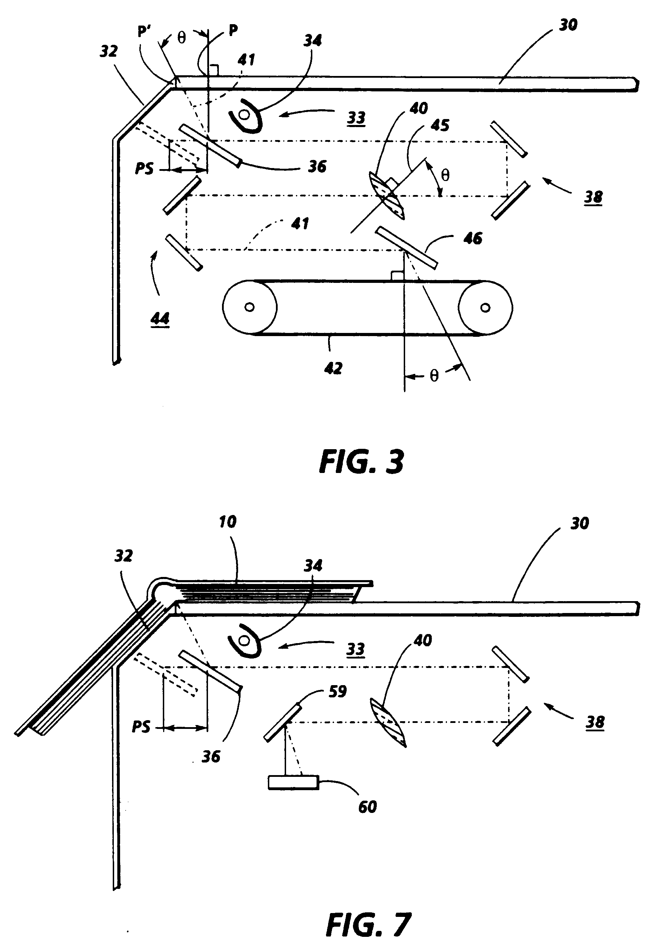

Figure 3 illustrates, in side view, a platen and scanning system adapted, according to the principles of the present invention, for book edge copying. A platen 30 has been modified by adding a downwardly sloping shelf 32. The scanning components assume the relationship shown in Figure 2. Full-rate scan assembly 33 comprises a lamp/mirror combination 34 and a scan mirror 36. Half rate mirror assembly 38 reflects light through lens 40. Lens 40 projects the image onto photoreceptor belt 42 via corner mirror assembly 44 and belt mirror 46. According to the principles of the present invention, the system axis has been tilted by an angle ϑ from the perpendicular orientation shown in Figure 1, by rotating mirror 36 through an angle ϑ/2. This system axis rotation has the effect of moving the conventional start of scan from position P to position P' coincident with the binding area of book 10 being copied. Lens 40 is also tilted by an angle ϑ from the normal lens optical axis 41; belt mirror 46 is tilted by ϑ/2.

In comparing the tilted system axis of Figure 3 with the Figure 1 axis, it is seen that the system axis 41 by virture of the rotation through angle ϑ, is no longer coincident with the lens optical axis (the Figure 1 embodiment). Angle ϑ, in a preferred embodiment, is 20° and can be within a range between 15°-25°.

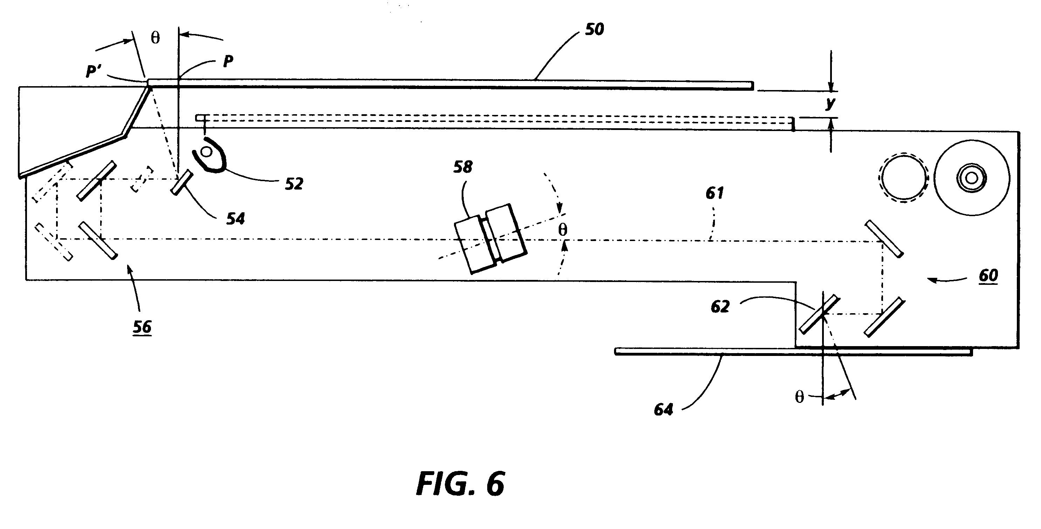

In operation, and referring to Figures 3 and 4, at the start of a scan cycle, mirror 36 makes a pre-scan excursion to the dotted line position providing the necessary distance PS to enable the mirror to accelerate to scan position without affecting the projected image. At the start-of-scan position, (solid line) mirror 36, by virtue of its 20° inclination to normal, enables the start-of-scan to begin, as described, at point P', at the binding area 47 of book 10 being copied. Thus, the edge of the book page is imaged and reflected from mirror 36 to be formed as an undistorted image at the photoreceptor. The tilt introduced at the lens 40 and the tilt of belt mirror 46 corrects for off axis imaging distortion as shown more clearly in connection with Figure 5.

Figure 5 shows conventional imaging with a lens and no mirrors. Line 19 is the optical axis of the lens. The object plane 30 and image plane 42 are perpendicular to the optical axis. The prior art embodiment of Figure 1 positions the platen 12 at the object plane and the photoreceptor 28 tangent to the image plane. Mirrors are added and the system axis of the scan system is coincident with the optical axis 19. Referring still to Figure 5, the line (ray) 41 is often called a chief or principal ray of the system. The embodiments shown in Figures 3-7 purposely locates the system axis of the scan system coincident with this principal ray 41 instead of the optical axis 19 as in the prior art. If one then uses the system axis 41 as a reference, the required angular orientations of the object plane, image plane, and lens to this axis are clear Embodiments 3-7 can be considered as a rotation of the system axis ϑ away from its usual coincidence with the lens optical axis.

According to another aspect of the present invention, the benefits of rotating the system axis may also be realized in a scanning system wherein the conventional full rate-half rate mirror system shown in Figure 1 is used. Figure 6 shows a second embodiment of the invention wherein the platen is raised to a higher position to allow for increased prescan movement of the half-rate assembly. As in the Figure 3 embodiment the scan mirror, and hence the system axis, is tilted at an angle ϑ moving the start of scan to position P' and improving the full corner imaging. Thus, referring to Figure 6, platen 50 extends, for comparison purposes, a distance y above the dotted line position associated with the Figure 3 embodiment. Lamp reflector assembly 52, and scan mirror 54, tilted at an angle ϑ/2, with respect to the perpendicular, scans from left to right at the full-rate speed. Half-rate assembly 56 moves from left to right at the half-rate speed. Lens 58 is rotated an angle ϑ. The light image is reflected by corner mirror assembly 60 and belt mirror 62 along system axis 61 onto the surface of the photoreceptor belt 64, a portion of which is shown. The advantage of this embodiment, compared to that of the Figure 3 embodiment, is that there are no limitations on the lens movement in an enlargement mode.

The principles of the present invention are also applicable to a system which utilizes a scanning system which electronically captures the image by means of a photosensor array. Figure 7 illustrates a variation of the scan system of Figure 2. In this embodiment, the scanning system forms a raster input scanner (RIS) system. Book 10 is once again placed on platen 30 having a book edge 32. Full rate scanning assembly 34, having tilted mirror 36, goes through a prescan movement and scans the book as previously described in connection with the Figure 2 embodiment. The image is projected by lens 40 and reflected from mirror 59 onto CCD array 60. The scanned image is thus captured electronically, line by line, at array 60. Outputs from the array representing scanned lines of information, are sent to image processing and storage units. The image processing outputs may then be used to create 1X or reduced or enlarged images at a photroreceptor using a raster output scanner (ROS) as is known in the art.

While the invention has been described with reference to the structure disclosed, it is not confined to the details set forth, but is intended to cover such modifications or changes as may come within the scope of the following claims. For example, while the scanning system has been decribed in terms of the conventional left to right scanning system, it is equally applicable to system which scans a document from right to left.

## Claims

1. An electrophotographic reproduction machine incorporating a platen (30) having a downwardly sloping shelf (32) at one end, said platen (30) and shelf (32) adapted to accommodate the binding area of a bound book when said book is placed in a copying position and supported by said platen (30) and shelf (32),
said machine further including an optical scanning and imaging system (34,36,38,40,44,46) for scan/illuminating the book and for projecting an image along an optical path onto a photosensitive image medium (42) to form a latent image of the book thereon, said optical scanning system comprising
an elongated illumination means (34) adapted to incrementally illuminate said book beginning at a point P' coinciding with said binding area,
a full rate scan mirror (36) adapted to be positioned a prescan distance PS from a start of scan position P to undergo a prescan, the mirror (36), when reaching position P, begins scanning said book at the binding area, the light from the mirror (36) being reflected to a half rate scan mirror (38), the full rate scan mirror (36) being positioned so that the optical path between the platen (30) and the full rate scan mirror (36) forms a constant angle ϑ with respect to a line perpendicular to the platen (30), and
a projection through lens (40) which receives the light reflected from said half rate scan mirror (38) and projects the light to said image medium, said projection through lens (40) being inclined at said constant angle ϑ with respect to the optical path through said lens (40).

2. A machine as claimed in claim 1, wherein said photosensitive image medium is a linear photosensor array (60).

## Patentansprüche

1. Elektrophotographisches Reproduktionsgerät, das eine Auflageplatte (30) einsetzt, die eine schräg nach unten verlaufende Platte (32) an einem Ende besitzt, wobei die Auflageplatte (30) und die Platte (32) dazu geeignet sind, einen Bindebereich eines gebundenen Buches aufzunehmen, wenn das Buch in einer Kopierstellung angeordnet und durch die Auflageplatte (30) und die Platte (32) getragen wird,
wobei das Gerät weiterhin ein optisches Abtast- und Abbildungssystem (34,36,38,40,44,46) zum Abtasten/Beleuchten des Buches und zur Projektion einer Abbildung entlang eines optischen Pfades auf ein photoempfindliches Abbildungsmedium (42), um eine latente Abbildung des Buchs darauf zu bilden, aufweist, wobei das optische Abtastsystem
eine langgestreckte Beleuchtungseinrichtung (34) aufweist), um fortschreitend das Buch zu beleuchten, und zwar beginnend an einem Punkt P', der mit dem Bindebereich übereinstimmt,
einen Gesamtraten-Abtastspiegel (36), der dazu geeignet ist, daß er in einem Vorababtastabstand PS von einem Startpunkt P des Abtastens angeordnet wird, um eine Vorababtastung zu durchlaufen, wobei der Spiegel (36), wenn er die Stellung P erreicht, damit beginnt, das Buch an dem Bindebereich abzutasten, wobei das Licht von dem Spiegel (36) auf einen Halbraten-Abtastspiegel (38) reflektiert wird, wobei der Gesamtraten-Abtastspiegel (36) so angeordnet wird, daß der optische Pfad zwischen der Auflageplatte (30) und dem Gesamtraten-Abtastspiegel (36) einen konstanten Winkel ϑ im Hinblick auf eine Linie rechtwinklig zu der Auflageplatte (30) bildet, und
eine Projektion durch die Linse (40) aufweist, die das Licht, das von dem Halbraten-Abtastspiegel (38) reflektiert wird, aufnimmt und das Licht auf das Abbildungsmedium projiziert, wobei die Projektion durch die Linse (40) unter diesem konstanten Winkel ϑ hinsichtlich des optischen Durchgangspfades durch die Linse (40) geneigt ist.

2. Gerät nach Anspruch 1, wobei das photoempfindliche Abbildungsmedium eine lineare Photosensorfeldanordnung (60) ist.

## Revendications

1. Machine de reproduction électrophotographique incorporant une platine (30) ayant à l'une de ses extrémités une étagère inclinée vers le bas (32), lesdites platine (30) et étagère (32) étant destinées à recevoir la zone de reliure d'un livre relié lorsque ce livre est placé dans une position de reproduction et supporté par lesdites platine (30) et étagère (32);
- ladite machine comportant en outre un système optique de balayage et d'imagerie (34, 36, 38, 40, 44, 46) pour balayer/éclairer le livre et pour projeter une image suivant un trajet optique sur un support d'image photosensible (42) afin de former sur son dessus une image latente du livre, ledit système optique de balayage comportant :
- un moyen d'éclairage allongé (34) destiné à éclairer par incréments ledit livre en commençant à un point P' coïncidant avec ladite zone de reliure,
- un miroir de balayage à pleine vitesse (36) destiné à être placé à une distance de pré-balayage PS par rapport à une position de début de balayage P pour subir un pré-balayage, le miroir (36), lorsqu'il atteint la position P, commence à procéder au balayage dudit livre à la zone de reliure, la lumière provenant du miroir (36) étant réfléchie sur un miroir de balayage à mi-vitesse (38), le miroir de balayage à pleine vitesse (36) étant positionné de façon que l'axe optique entre la platine (30) et le miroir de balayage à pleine vitesse (36) forme un angle constant ϑ avec une ligne perpendiculaire à la platine (30), et
- une lentille de projection (40) qui reçoit la lumière réfléchie par ledit miroir de balayage à mivitesse (38) et projette la lumière sur ledit support d'image, ladite lentille de projection (40) étant inclinée audit angle constant ϑ par rapport au trajet optique traversant ladite lentille (40).

2. Machine selon la revendication 1, dans laquelle ledit support d'image photosensible est un réseau de photodétecteurs linéaires (60).
